# EUROPEAN PATENT APPLICATION

(11) **EP 1 199 644 A2**
(43) Date of publication of application: **24.04.2002**
(21) Application number: 00126864.8
(22) Date of filing: 07.12.2000
(51) Int. Cl.: G06F 17/30

(54) **A system and method for publishing web pages**

(30) Priority: 06.10.2000 EP 00308810
(71) Applicant: Epoch Software Holdings PLC, London NW9 6BX (GB)
(72) Inventor: Piponi, Paolo, Colindeep Lane, London NW9 6BX (GB); Cole, Robert, Colindeep Lane, London NW9 6BX (GB); Barton, Zac, Colindeep Lane, London NW9 6BX (GB)
(74) Representative: Hoarton, Lloyd Douglas Charles

(57) **Abstract**

A web page publishing system comprising a component library containing a number of software code components each of which provides a software implemented function or facility and a tag library containing a number of tags each of which represents content for a web page, wherein a web page to be published by the system comprises a selection of one or more software code components derived from the software code components held by the component library and a selection of one or more tags derived from the tags held by the tag library.

## Description

THE PRESENT INVENTION relates to a system and method for publishing web pages and for controlling and altering the content thereof.

Commercial entities use web sites as a means of communicating information to third parties and their employees. Web sites are also used for the purpose of advertising that commercial entity's products or services as well as those of others. A company's web site is typically maintained in-house although smaller companies and individuals without the technical capability to maintain a web site may use the services of a web publisher.

Situations are envisaged where a large body of different companies wish to display essentially the same information on their web sites and have various facilities available on those web sites such as shopping baskets, search engines, interactive law guides, guides to other sites etc. Once the content and facilities available through a particular web site have been finalised and the web site published, any revision of that content or those facilities must be implemented on a web site by web site basis. Accordingly, a considerable amount of manpower and expense would be expended by a web publisher updating a plurality of sites carrying essentially the same information.

By linking sites together, it is possible to include content from other sites so that a change in that content will be reflected by a change in the content of other related sites. However, the look and feel of the common content does not change between the web sites and so it becomes obvious to a user of a number of such websites that the common subject matter stems from a common source. Individual companies jealously guard their reputations and may not wish to be so publicly associated with a common source and may also wish to stamp their own branding on the content of their web page so as to appear unique.

Present systems and methods of web publishing suffer from the problems mentioned above. It is an object of the present invention to seek to provide a method and system of publishing web sites which obviates these problems and allows web sites to be readily updated with common content whilst also providing what appears to a user of the site to be a uniquely branded site.

Accordingly, one aspect of the present invention provides a web page publishing system comprising a component library containing a number of software code components each of which provides a software implemented function or facility and a tag library containing a number of tags each of which represents content for a web page, wherein a web page to be published by the system comprises a selection of one or more software code components derived from the software code components held by the component library and a selection of one or more tags derived from the tags held by the tag library.

Preferably, the system comprises a compiler operable to translate the tags held by the tag library from uncoded tags into coded tags, the coded tags being more complex than the uncoded tags.

Conveniently, the compiler comprises a look-up table of uncoded and coded tags.

Advantageously, the component library and the tag library are resident on a common server.

Preferably, the content for the web page is held in a content library.

Conveniently, the content library is held on the same server as the component library and the tag library.

Advantageously, each tag points to the content for a web page from the content library.

Preferably, the system comprises means to store a plurality of web pages to be published by the system.

Another aspect of the present invention provides a method of publishing a web page comprising the steps of: providing a component library containing a number of software code components each of which provides a software implemented function or facility; providing a tag library containing a number of tags each of which represents content for a web page; selecting one or more components from the component library; selecting one or more tags from the tag library; compiling a web page from the selected components and tags; and publishing the web page.

Preferably, a publisher controls the component and tag libraries and the selection steps comprise the steps of a third party selecting the components and tags from the libraries, the publisher subsequently compiling and publishing the web page.

Conveniently, the content for the web page is held in a content library and the method includes the further steps of selecting the content from the content library.

A further aspect of the present invention provides a method of amending a published web page comprising the further steps of amending a software code component in the component library and republishing the web page, changes made to the component in the component library being reflected by corresponding changes in the published web page.

Another aspect of the present invention provides a method of amending a published web page comprising the further steps of amending a tag in the tag library and republishing the web page, changes made to the tag in the tag library being reflected by corresponding changes in the published web page.

A further aspect of the present invention provides a method of amending a published web page comprising the further steps of amending content in the content library and republishing the web page, changes made to the content in the content library being reflected by corresponding changes in the published web page.

In order that the present invention may be more readily understood, embodiments thereof will now be described, by way of example, with reference to the accompanying drawings, in which:
Figure 1 is a schematic block diagram of a web page publishing system embodying the present invention.
Figure 2 is an uncoded web page for compilation in accordance with an embodiment of the present invention;
Figure 3 is a look-up table for use with one embodiment of the present invention;
Figure 4 is a coded version of the uncoded web page of Figure 2 after compilation in accordance with an embodiment of the present invention;
Figure 5 is a published version of the web page of Figures 2 and 4;
Figure 6 is a screen print of a web page published in accordance with an embodiment of the present invention; and
Figure 7 is a screen print of another web page published in accordance with an embodiment of the present invention.

A system of publishing web pages and an associated method embodying the presented invention are implemented by a website publisher for one or more partners who are typically customers of the publisher. The business relationship between the publisher and the partners is not of technical import. Preferably, the partners are customers of the publisher and each partner pays a fee to the publisher for the publishing of their website. An alternative relationship is that the publisher and the partners are part of the same company with the partners comprising divisions of the company and wishing to present a series of websites having content which is consistent throughout the company and co-ordinated by head office - the publisher.

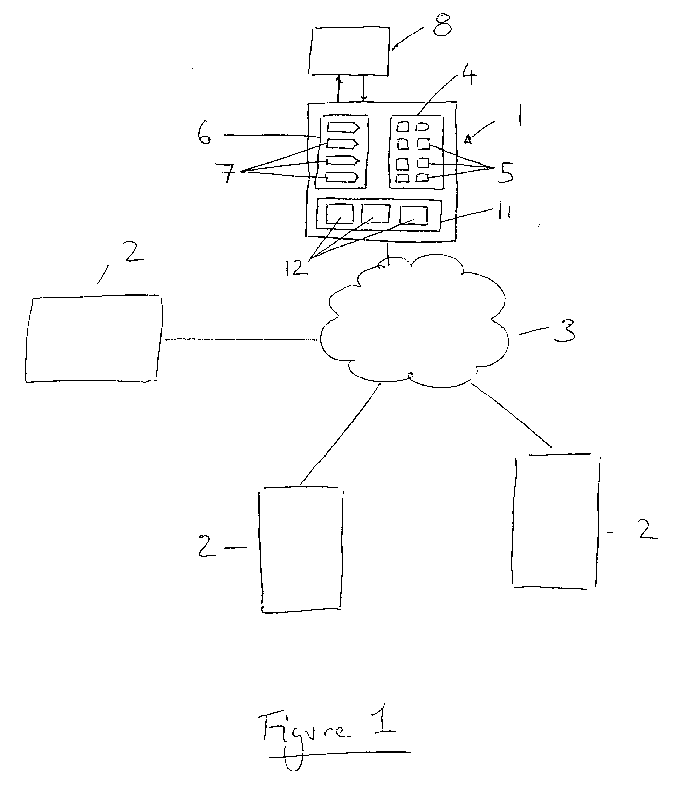

The publisher and the partners each have servers which are remote from one another, conveniently connected to one another through the Internet or other suitable network. Figure 1 shows a publisher's server 1 connected to a plurality of separate partner's servers 2 through the Internet 3.

The heart of the system comprises a library 4 of a plurality of software code components 5 which are stored on the publisher's server 1. Each of the software code components 5 comprises a facility which can be offered to a partner of the publisher for publication in the partner's web site, typically as a page or as part of a page of the website. The software code components 5 can be any software implemented facility or function provided by a web site such as a shopping basket; a search engine; an interactive law guide; a registration process; presentation graphics or the like. Each of the software code components 5 comprises a stand-alone software coded module. The construction of such software code components 5 is readily known to a person of ordinary skill in the technical field.

As well as the software code components 5, the publisher's server 1 also stores a library 6 of a plurality of "tags" 7. Each tag 7 is a flag for the content of the page of a web site. A tag 7 represents content such as a header of a web page, a footer, a log-in form, or provide a basic indication of how the results of a search are to be formatted for presentation, i.e. coloured, bulleted or numbered. Tags 7 may also represent advertising banners for insertion as content in a web page. The tags 7 are conveniently written in HTML and are stored in the library in an "uncoded" format which is discussed below. Tags 7 may be specific or generic to a software code component 5.

A content library 11 is also resident on the publisher's server 1 and contains the content 12 of a page or part of a page which is associated with each of the tags 7.

The publisher's server 1 has a resident engine or compiler 8 which is operable to compile coded pages containing tags 7 from uncoded pages. The uncoded pages are provided to the publisher's server 1 by each of the partner's servers in a manner which is described more fully below.

In one embodiment, the compiler 8 resident on the publisher's server 1 comprises a look-up table which looks up the individual tags 7 in their uncoded format and converts them into coded tags which are more complex and incorporate more features than the simple uncoded tags. Effectively, the compiler takes each uncoded tag 7 and looks at any attributes which may be attached to or included in the tag 7 and implements these so that the coded tag is used to instruct a web page how to display and run a particular chosen software code component 5.

In operation, a number of partners' servers 2 are provided access over the Internet 3 or possibly a dedicated communication line to the publisher's server 1, or at least to a dedicated area within a publisher's server 1 - most conveniently a web page. From that web page, the partner can select a blank uncoded page for publication on their own web site. As well as selecting a blank page or template page, the partner is presented with a choice of also selecting the software code components 5 and tags 7 for inclusion on that page. Preferably, the tags 7 and components 5 are presented to the partner on the web page from a series of drop down menus. Similarly, the template pages can also be selected from a series of drop down menus.

When the partner has selected a blank page or template page and subsequently selected the tags 7 and components 5 for that page from the respective libraries 6,4, these are presented to the partner in the form of an uncoded page, an example of which is shown in Figure 2. In the example of Figure 2, the uncoded web page comprises a software code component 5 which is an interactive law guide or browser i.e. an interactive law guide facility for a web page. On this page, most of the tags 7 comprise basic formatting commands for the page. Two tags have been specifically highlighted - Tag1 and Tag2.

When the partner has completed the page and is happy for this page to form part of the partner's website, then the partner sends the uncoded page to the publisher's server 1 to be compiled by the compiler 8. The compiler 8 compiles the uncoded page by looking at the various tags 7 and identifying the more complex coded tag which corresponds thereto. Figure 3 is an exemplary page of a look-up table used by the compiler 8 to take the uncoded tags 7 "ComponentTag" from the uncoded page and convert each one into the corresponding more complex coded tag 9 "ComponentTagToFile".

The compilation is important not only because it allows the insertion of attributes which the publisher's server can convert into code but also because it provides extra security for the system because the partner cannot "see" the real code which is being applied to the content and therefore cannot effect their own changes without co-operation from the publisher. A compilation step can be regarded as a key to the system preventing the content and appearance of the web site from being altered without authorisation from the publisher - thereby providing extra security for the system.

The compilation of the uncoded page of Figure 2 results in the coded page of Figure 4. The same two tags (Tag1 and Tag2) highlighted in Figure 2 have been highlighted in Figure 4 so that the compilation process can be more readily appreciated. The coded page can then be displayed as a web page 10 to the partner as shown in Figure 5. It should be noted that this web page 10 is not "live" but is a facsimile of the appearance of the web page to be published by the system if approved by the partner.

It will be appreciated that upon displaying the proposed page 10 as shown in Figure 5, the relevant content 12 in the page 10 dictated by the tags 7 on that page is automatically included. Since the tags 7 represent a flag for the content 12 of a page, the content associated with each of the tags is dragged from the content library 11 onto the page 10. Referring to Figure 5, it will be appreciated that the tags 7, Tag1 and Tag2 have dragged into the web page the content 12 of which they are respectively representative. The tag Tag1 is representative of the content 12 header or title *"The Contract"* and the tag Tag2 is representative of the content 12 comprising a body of text beginning *"There is no legal requirement..."* and continuing off the visible part of the web page 10.

These coded web pages 10 are made visible to the partner, preferably over the publisher's own web site. If the web page 10 or any changes thereto are approved by the partner, then the revised page or site can be published live by the publisher. The system stores the coded web page(s) for each partner and simply republishes web pages after any amendment or modification by the partner or the publisher.

Since the uncoded pages are in HTML text, they can be readily altered by partners (for subsequent compilation and publishing by the publisher). However, HTML text is not terribly sophisticated so the compilation step provides a further level of sophistication by being able to introduce more complex instructions and attributes which cannot be easily handled in HTML text instructions.

Figures 6 and 7 show two web pages 10 for different partners which have been prepared using a system and method embodying the present invention. It can be appreciated that the two web pages 10 are visibly different from one another and therefore confer the individualistic branding required by a company (the individual partner). However, upon closer scrutiny of the two pages 10, it becomes apparent that most of the basic content of the two pages is common although formatted very differently.

Changes can readily be made to the content 12 itself on the publisher's server 1. Any changes in the content 12 held in the content library 11 on the publisher's server 1 will be reflected in all web pages published by the publisher's server 1 which include the specific tag 7 which acts as a flag for that content 12. Thus, changes in content 12 made on the publisher's server 1 are automatically rippled through to changes in the content 12 of all the individual partner's web pages which incorporate that tag 7.

Similarly, any changes in the software code making up a component 5 selected by a partner are also rippled through to the individual web sites. Thus, any change or improvement in any one of the software modules is automatically provided to a partner's web page without that partner needing to request a modification or patch. Likewise changes made to the uncoded tags 7 are also rippled through to resultant web page 10 after compilation.

The ease with which a plurality of web sites displaying common subject matter can be readily maintained using the system and method embodying the present invention is extremely advantageous. Furthermore, the ability for individual partners to customise their pages by simply selecting components 5, tags 7 and content 12 as required provides each partner with their very own customised web site which can be readily updated with the addition or removal of selected components, tags and/or content.

The range of products and information available to a partner can be profiled to individual partners in accordance with a pricing strategy so that a greater range of products and information is available to those partners who subscribe to a more wide-ranging service.

It is also envisaged that a style sheet be provided which is accessible by the partner so that the layout and graphics and some of the colours and formatting used in the final web page can be dictated by the partner.

In the present specification "comprise" means "includes or consists of" and "comprising" means "including or consisting of'.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A web page publishing system comprising a component library containing a number of software code components each of which provides a software implemented function or facility and a tag library containing a number of tags each of which represents content for a web page, wherein a web page to be published by the system comprises a selection of one or more software code components derived from the software code components held by the component library and a selection of one or more tags derived from the tags held by the tag library.

2. A system according to Claim 1, wherein the system comprises a compiler operable to translate the tags held by the tag library from uncoded tags into coded tags, the coded tags being more complex than the uncoded tags.

3. A system according to Claim 2, wherein the compiler comprises a look-up table of uncoded and coded tags.

4. A system according to any preceding claim, wherein the component library and the tag library are resident on a common server.

5. A system according to any preceding claim, wherein the content for the web page is held in a content library.

6. A system according to Claim 5, wherein the content library is held on the same server as the component library and the tag library.

7. A system according to Claim 5 or 6, wherein each tag points to the content for a web page from the content library.

8. A system according to any preceding claim, wherein the system comprises means to store a plurality of web pages to be published by the system.

9. A method of publishing a web page comprising the steps of:
providing a component library containing a number of software code components each of which provides a software implemented function or facility;
providing a tag library containing a number of tags each of which represents content for a web page;
selecting one or more components from the component library;
selecting one or more tags from the tag library;
compiling a web page from the selected components and tags; and publishing the web page.

10. A method according to Claim 9, wherein a publisher controls the component and tag libraries and the selection steps comprise the steps of a third party selecting the components and tags from the libraries, the publisher subsequently compiling and publishing the web page.

11. A method according to Claim 9 or 10, wherein the content for the web page is held in a content library and the method includes the further steps of selecting the content from the content library.

12. A method of amending a web page published according to any one of Claims 9 to 11, comprising the further steps of amending a software code component in the component library and republishing the web page, changes made to the component in the component library being reflected by corresponding changes in the published web page.

13. A method of amending a web page published according to any one of Claims 9 to 12, comprising the further steps of amending a tag in the tag library and republishing the web page, changes made to the tag in the tag library being reflected by corresponding changes in the published web page.

14. A method of amending a web page published according to any one of Claims 9 to 13, comprising the further steps of amending content in the content library and republishing the web page, changes made to the content in the content library being reflected by corresponding changes in the published web page.
